# NEUE EUROPÄISCHE PATENTSCHRIFT

(11) **EP 2 469 363 B2**
(45) Veröffentlichungstag und Bekanntmachung des Hinweises auf die Entscheidung über den Einspruch: **14.02.2018**
(45) Hinweis auf die Patenterteilung: 27.05.2015
(21) Anmeldenummer: 12001436.0
(22) Anmeldetag: 27.01.2009
(51) Int. Cl.: G05B 19/042, B61L 25/02

(54) **Parametrierbare Automatisierungsvorrichtung**
Configurable automation device
Dispositif d'automatisation paramétrable

(30) Priorität: 31.01.2008 DE 102008007138
(43) Veröffentlichungstag der Anmeldung: 27.06.2012
(62) Teilanmeldung aus: 09001075.2
(73) Patentinhaber: Phoenix Contact GmbH & Co. KG, 32825 Blomberg (DE)
(72) Erfinder: Horn, Steffen, 32825 Blomberg (DE)
(74) Vertreter: Bill, Burkart Hartmut

(56) Entgegenhaltungen:
- WO-A1-2005/022279
- WO-A1-2006/114112
- WO-A1-2007/122117
- DE-A1-102006 005 709
- "Siemens SIMOTION SCOUT - Projektierungshandbuch", Siemens AG, Ausgabe 03/2007
- "Siemens SIMOTION - Terminal Modules TM15 / TM17 High Feature" Siemens AG, Ausgabe 03/2007

## Beschreibung

Die vorliegende Erfindung betrifft das Gebiet der Steuerungs- bzw. der Automatisierungstechnik.

In modernen Automatisierungssystemen findet zunehmend eine Trennung zwischen einem Steuerungssystem, einem Kommunikationssystem und der Geräteebene statt, wobei im Zuge der Dezentralisierung immer mehr Steuerungsintelligenz in die Feldgeräte integriert wird. In diesem Zusammenhang gewinnt die Parametrierung der Gerätefunktionen immer mehr an Bedeutung, damit eine sichere Systemfunktionsweise gewährleistet wird.

Bei den bekannten Automatisierungssystemen werden oft proprietäre Mechanismen der integrierten Geräteparametrierung eingesetzt, so dass Fremdgeräte, die über diese proprietären Mechanismen nicht verfügen, nicht eingesetzt werden können. Aus diesem Grund ist eine offene und standardmäßige Ausführung von Schnittstellen von Bedeutung, wobei eine bestmöglich integrierte Parametrierung von Fremdgeräten essenziell ist.

Aufgrund der Trennung der Steuerungsebene und der Geräte- bzw. der Vorrichtungsebene werden die notwendigen Parametrierungsschritte oft getrennt ausgeführt. So wird beispielsweise auf der Steuerungsebene die Steuerung und auf der Geräteebene das Gerät parametriert. In der Steuerung werden ferner Variablen verwendet, welche beispielsweise einen I/O-Bezug zu den Kanälen auf den jeweiligen Geräten haben. Diese Kanäle müssen vor dem Betrieb des jeweiligen Gerätes parametriert werden, damit sie benutzt werden können. Denn erst durch die Parametrierung erhalten diese Kanäle auf den Geräten ihre Funktion.

Die Trennung der beiden vorstehend genannten Handhabungsschritte ist daher zumindest in Automatisierungsanlagen problematisch, da sie mit einem unterschiedlichen Tooling, mit einer unterschiedlichen Projektablage sowie mit einer Inkonsistenz der Geräteparametrierung und der Steuerungsparametrierung führen können.

Die WO 2005/022279 A1 offenbart ein Verfahren zur Parametrierung von Automatisierungseinrichtungen, bei dem die einrichtungsspezifischen und/oder prozessspezifischen Parameter vor oder in Verbindung mit der jeweiligen Automatisierungseinrichtung automatisch generiert werden. diese Parameter werden jedoch getrennt voneinander generiert.

Die Druckschrift DE 10 2006 005 709 A1 offenbart ein Verfahren zum parametrieren einer Druckmessvorrichtung, bei dem Parameter von einem Steuergerät an eine Schnittstelle der Auswerteeinheit der Druckmessvorrichtung übertragen werden.

Die Druckschrift WO 2006/114112 A1 offenbart ein Verfahren zur Konfiguration einer Steuereinheit eines Konfigurationssystems.

Die Druckschrift WO 2007/122117 A1 offenbart ein Verfahren zum Parametrieren eines Feldgerätes, bei dem azyklische Dienste nachgebildet werden. Dabei werden Parameter in Telegramme der zyklischen Dienste verpackt und an das betreffende Feldgerät, dessen Parameter geändert werden sollen, gesendet.

Es ist die Aufgabe der vorliegenden Erfindung, ein effizientes Konzept zur Geräte- und Steuerungsparametrierung einer Automatisierungsvorrichtung zu schaffen.

Diese Aufgabe wird durch die Merkmale des unabhängigen Patentanspruchs gelöst.

Die Erfindung basiert auf der Erkenntnis, dass eine effiziente Parametrierung einer Automatisierungsvorrichtung dann durchgeführt werden kann, wenn die Steuerungsparametrierung und die Geräte- bzw. die Vorrichtungsparametrierung gemeinsam bzw. bevorzugt in einem Schritt durchgeführt werden können. Somit kann eine effiziente Integration der Geräte- bzw. der Kanalparametrierung in Steuerungen mit vereinfachten Handhabungsabläufen und verringerter Wahrscheinlichkeit von Anwendungsfehlern, was vorteilhaft u.a. bei Parametrierung von sicherheitsrelevanten Geräten ist, erreicht werden. Die Parametrierung kann mittels eines Computerprogramms ausgeführt werden, sodass gemäß einer Ausführungsform unter der Parametrierung einer Automatisierungsvorrichtung die Programmierung derselben verstanden werden kann.

Gemäß einer Ausführungsform umfasst der Vorrichtungsparameter einen Filterparameter oder einen Sensorparameter oder einen Spannungsversorgungsparameter oder einen Ausgabeparameter oder einen Eingabeparameter oder einen Testparameter oder einen Inbetriebnahmeparameter der Automatisierungsvorrichtung.

Gemäß einer Ausführungsform umfasst der Steuerungsparameter zumindest eine Steuerungsvariable.

Gemäß einem Aspekt betrifft die Erfindung eine programmtechnisch eingerichtete Automatisierungsvorrichtung, die ausgebildet ist, ein Steuerungsprogramm auszuführen, wobei beim Ausführen des Steuerprogramms zumindest ein Steuerungsparameter der Automatisierungsvorrichtung zum Festlegen der Steuerungscharakteristik der Automatisierungsvorrichtung eingebbar ist und wobei zu dem zumindest einem Steuerungsparameter ein Vorrichtungsparameter zum Festlegen einer Vorrichtungscharakteristik der Automatisierungsvorrichtung zuweisbar ist, wobei die Automatisierungsvorrichtung ferner ausgebildet, das Steuerungsprogramm zum Ausführen des Verfahrens zur Parametrierung einer Automatisierungsvorrichtung auszuführen.

Gemäß einem Aspekt betrifft die Erfindung eine parametrierbare Automatisierungsvorrichtung zum Steuern eines Prozesses, mit einer Schnittstelle zum Eingeben eines Steuerungsparameters, um eine Steuerungscharakteristik der Automatisierungsvorrichtung festzulegen, und zum Eingeben eines Vorrichtungsparameters, um eine Vorrichtungscharakteristik der Automatisierungsvorrichtung festzulegen, und einem Prozessor zum Einstellen eines Betriebszustandes der Automatisierungsvorrichtung ansprechend auf den Vorrichtungsparameter.

Gemäß einer Ausführungsform ist die parametrierbare Automatisierungsvorrichtung ausgebildet, einen Prozess unter Verwendung des Steuerungsparameters zu steuern.

Weitere Ausführungsbeispiele werden Bezug nehmend auf die beigefügten Zeichnungen näher erläutert. Es zeigen:
Fig. 1 ein vereinfachtes Ablaufdiagramm eines Verfahrens zur Parametrierung einer Automatisierungsvorrichtung;
Fig. 2 ein Programmeingabefeld;
Fig. 3 ein Programmeingabefeld; und
Fig. 4 ein Programmeingabefeld.

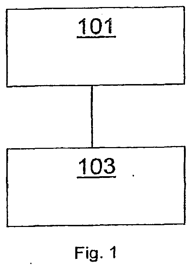

Fig. 1 verdeutlicht die Parametrierung einer nicht dargestellten Automatisierungsvorrichtung, wobei im Schritt 101 zumindest ein Steuerungsparameter der Automatisierungsvorrichtung festgelegt wird, der eine Steuerungscharakteristik derselben festlegt. Somit können im Schritt 101 die Deklaration bzw. die Festlegung der Steuerungsvariablen oder Steuerungsparameter sowie die eigentliche Steuerungsprogrammierung durchgeführt werden

Im Schritt 103 wird ein Vorrichtungsparameter zu dem Steuerungsparameter zugewiesen, um eine Vorrichtungscharakteristik festzulegen. Somit wird sowohl die Steuerungs- als auch die Geräteebene gemeinsam parametriert. So können beispielsweise alle applikationsspezifischen Parametrierungen eines Endgerätes bzw. eines Kanals direkt bei der Variablen-Deklaration beispielsweise in einem Steuerungsprogramm vorgenommen werden.

Der Anwender kann beispielsweise bei der Variablen-Deklaration den Datentyp nach beispielsweise IEC 61131 und gegebenenfalls eine Adresse oder eine Verbindung zu einem Klemmpunkt definieren. Dabei ist es vorteilhaft, Variablen mit bestimmten Eigenschaften zu versehen, die beispielsweise als Attribute beschrieben sein können. Dabei kann es sich beispielsweise um einen SIL-Level (SIL: Safety Integrity Level) oder um eine Kanaligkeit für SafeeBool-Variablen, um Filterzeiten von Eingängen oder um Distanzen bzw. Abstände von Sensoren handeln

Bevorzugt kann ein Benutzer bei immer wieder vorkommenden Kanaleigenschaften beispielsweise bei einer Sensorik in einem I/O-Link eine Art Kanaldatentyp als einen Vorrichtungsparameter definieren, der später bei der Deklaration der Variablen des Steuerungsprogramms zugewiesen werden kann. Bei dem Kanaldatentyp kann es sich beispielsweise um einen gerätespezifischen Parameter oder um einen Parametersatz handeln, der die Kanaleigenschaften festlegt. Bevorzugt ist das System derart beschaffen, dass beispielsweise eine einmalige Eingabe ausreichend ist, so dass das System automatisch dafür Sorge trägt, dass der jeweilige I/O-Kanal, welcher beispielsweise mit der jeweiligen Variablen verknüpft ist, beispielsweise automatisch die passende Parametrierung erhält. Dadurch kann beispielsweise bei einem Gerätetausch die Gerätehandhabung sowie die Parametrierung, die Programmierung, die Inbetriebnahme und der Test der Parametrierung vereinfacht werden.

Gemäß einer Ausführungsform können die Programmierung, die Geräteparametrierung sowie die Verdrahtung bzw. die Bereitstellung von Anschlüssen zu einem Handhabungsschritt zusammengefasst werden. Diese Schritte können jedoch separat ausgeführt werden. Darüber hinaus ermöglicht das erfindungsgemäße Konzept, das zumindest beispielsweise in einem Programmiersystem eingebettet sein kann, auch die Verwaltung des mit der jeweiligen Variablen verknüpften I/O-Kanals, wobei die Verwaltung beispielsweise den Parametrierungsvorgang selbst oder Plausibilitätsüberprüfungen der Kanalparametrierung oder Plausibilitätsüberprüfungen der Verwendung eines Signals in einem Programm, wie beispielsweise die Überprüfung der Verwendung des zweikanaligen SIL-3-Eingangs, umfasst. Die Verwaltung kann ferner die Speicherung der Parametrierungswerte oder den automatischen Download der Parametrierungswerte zu einem entsprechenden Kanal bei Bedarf, im Anlauf, bei Gerätetausch, nach Geräteanforderung und programmgesteuert umfassen.

Die erfindungsgemäße Automatisierungsvorrichtung umfasst beispielsweise eine Steuerungsvorrichtung und optional ein Kommunikationssystem mit einem Feldbus und/oder einer Ethernet-Funktionalität. Die Automatisierungsvorrichtung ist derart beschaffen, dass die Vorrichtungscharakteristik wie beispielsweise die Geräte- und/oder die Kanalparametrierung gemeinsam beispielsweise in einem Verarbeitungsschritt mit der Variablen-Deklaration bezüglich der Steuerungscharakteristik beispielsweise direkt in einem Engineering-Fenster des Steuerungsprogramms vorgenommen werden kann.

Bei den Vorrichtungsparametern kann es sich beispielsweise um eine Angabe handeln, ob ein Kanal belegt oder nicht belegt ist, ob ein Anschluss einkanalig oder zweikanalig ist, ob die Sensorart eine intelligente Sensorart oder eine standardmäßige Sensorart ist oder welche Überwachungszeiten für eine Reaktionszeit vorgesehen sind. Darüber hinaus kann die Vorrichtungscharakteristik die Zuordnung von Taktung der einzelnen Kanäle beispielsweise zwecks Kurz- und/oder Querflusserkennung oder Diskrepanzzeiten umfassen. Darüber hinaus kann die Vorrichtungscharakteristik die Angabe enthalten, ob eine Diskrepanzüberwachung ein- oder ausgeschaltet ist.

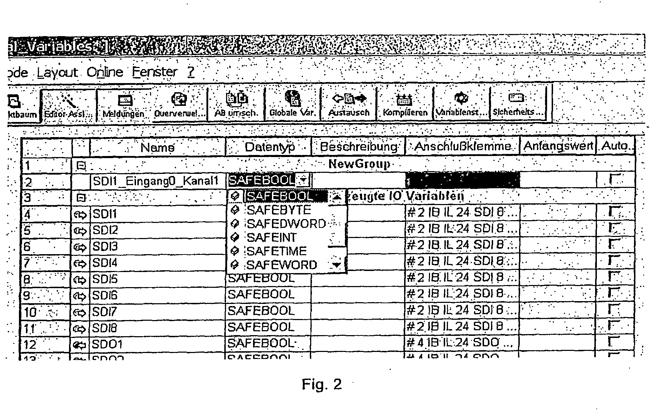

In den Figuren 2, 3 und 4 sind anhand von programmgesteuerten Eingabemasken die Verfahrensschritte, die erfindungsgemäß gemeinsam durchgeführt werden können, separat verdeutlicht.

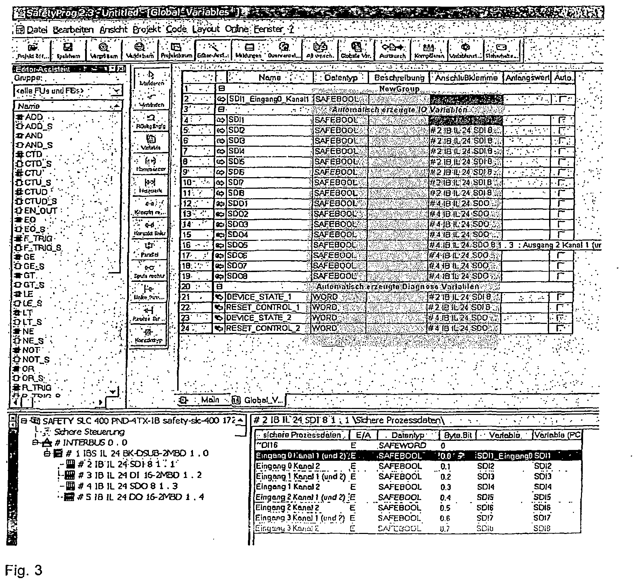

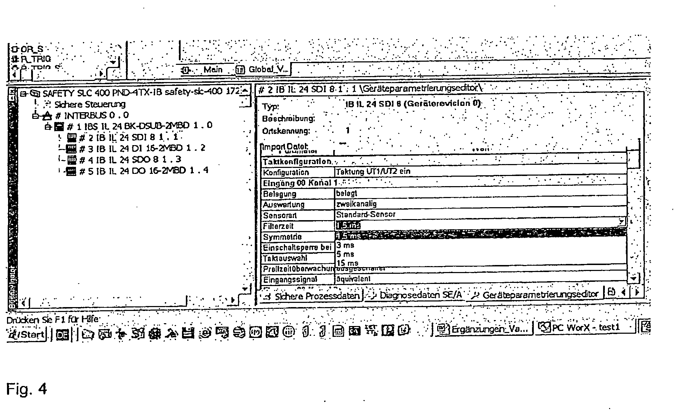

Wie in Fig. 2 dargestellt, kann zunächst eine Variable in einem Steuerungsprogramm gemeinsam mit der Festlegung eines Datentyps der Variablen, beispielsweise SafeBool angelegt werden. In einem weiteren Schritt kann diese Variable zu einem I/O-Kanal der Peripherie zugeordnet werden, wie es in Fig. 3 dargestellt ist. In einem weiteren Schritt, der in Fig. 4 verdeutlicht ist, kann die Geräte- oder die Kanalparametrierung vorgenommen werden. Bei den Geräteparametern kann es sich beispielsweise um eine Filterzeit von 1,5 ms, um eine Symmetrie von 1,5 ms, um eine Einschaltsperre bei beispielsweise 3 ms, um eine Taktauswahl bei beispielsweise 5 ms oder um eine Prellzeitüberwachung bei beispielsweise 15 ms handeln. Dabei sind die Zeitintervalle beliebig innerhalb vorgegebener Grenzen einstellbar.

Bei einer gemeinsamen Ausführung der vorstehend genannten Verfahrensschritte kann in dem Verfahrensschritt aus Fig. 2 verhindert werden, dass der falsche Datentyp angelegt wird.

In dem zweiten Verfahrensschritt aus Fig. 3 kann eine falsche oder gar eine mehrfache Zuordnung des Datentyps ausgeschlossen werden werden. In dem dritten Verfahrensschritt aus Fig. 4 kann beispielsweise eine fehlerhafte Parametrierung oder eine fehlerhafte Zuordnung des Kanals unterbunden werden, so dass die Systemsicherheit insgesamt erhöht wird.

Erfindungsgemäß können die in den Figuren 2, 3 und 4 dargestellten Arbeitsschritte zusammengefasst und in einer gemeinsamen Maske dargestellt werden. Zuerst wird ein bestimmtes Parametrierungsprofil festgelegt, das beispielsweise einen Parametersatz, einen Parametertyp oder einen erweiterten Datentyp jeweils mit beispielsweise einer eindeutigen Kennung umfasst. Beim Anlegen der Variable wird bevorzugt nicht nur deren Datentyp, sondern auch das dazugehörige Parametrierungsprofil mit beispielsweise einem Parametertyp oder einem erweiterten Datentyp festgelegt. Die Profil- bzw. die Parameterübermittlung kann dem System überlassen werden, das beispielsweise bei einem Systemstart oder einem Gerätetausch die Parametrierung unter Verwendung eines automatischen Downloads ermöglicht. Bezug nehmend auf Fig. 2 könnte dies beispielsweise durch eine neue Spalte "Parameterprofil" neben der Spalte "Datentyp" mit den Auswahlmöglichkeiten SafeBool, SafeInt etc. von in der ersten Auswahlbox unterstützt werden. Bevorzugt können dort ebenfalls vordefinierte oder selbstdefinierbare Parametrierungsprofile für bestimmte Applikationen, wie beispielsweise eine Notausschaltung oder für eine Schutztür einem Benutzer zur Verfügung gestellt werden. Das angelegte Parameterprofil kann beispielsweise statisch einem Kanal zugeordnet und einmalig bei einem Systemstart übertragen werden. Bei einem Gerätetausch kann genau dieser Parametersatz erneut übertragen werden. Für dynamische Parameteränderungen während eines Betriebs, beispielsweise für dynamische Umparametrierungen eines Kanals, wird beispielsweise einem Applikationsprogramm Zugriff auf diesen Parametersatz oder zumindest auf eine Kennung des Parametersatzes gewährt. Dadurch kann die Parametrierung automatisch und dynamisch erfolgen.

## Patentansprüche

1. Parametrierbare Automatisierungsvorrichtung mit: einer Schnittstelle zum Eingeben eines Steuerungsparameters, um eine
Steuerungscharakteristik der Automatisierungsvorrichtung festzulegen, und zum Eingeben eines dem Steuerungsparameter zuzuweisenden
Vorrichtungsparameters, um eine Vorrichtungscharakteristik der Automatisierungsvorrichtung festzulegen, wobei die Automatisierungsvorrichtung
beim Ausführen eines Steuerungsprogramms ausgebildet ist, dass die Eingabe und Zuweisung in einem gemeinsamen Arbeitsschritt ausgeführt und
direkt in einem Engineering-Fenster des Steuerungsprogramms vorgenommen werden kann, um eine Steuerung- und Vorrichtungsparametrierung
gemeinsam durchzuführen; und einem Prozessor zum Einstellen eines Betriebszustandes der Automatisierungsvorrichtung ansprechend auf den Vorrichtungsparameter.

2. Parametrierbare Automatisierungsvorrichtung gemäß Anspruch 1, die ausgebildet ist, einen Prozess unter Verwendung des Steuerungsparameters zu steuern.

## Claims

1. Parameterizable automation device having: an interface for inputting a control parameter in order to specify a control characteristic of the automation device, and for inputting a device parameter, which is to be assigned to the control parameter, in order to specify a device characteristic of the automation device, wherein the automation device is formed as a control program is being carried out, that the inputting and assigning are carried out in a joint working step and can be effected directly in an engineering window of the control program in order to jointly implement a control parameterization and device parameterization; and a processor for adjusting an operating state of the automation device in response to the device parameter.

2. Parameterizable automation device as claimed in claim 1 which is designed to control a process by using the control parameter.

## Revendications

1. Dispositif d'automatisation paramétrable, comprenant:
une interface d'entrée d'un paramètre de commande pour spécifier une caractéristique de commande du dispositif d'automatisation, et pour l'entrée d'un paramètre de dispositif à affecter au paramètre de commande, pour spécifier une caractéristique de dispositif du dispositif d'automatisation, ledit dispositif d'automatisation étant réalisé lors de l'exécution d'un programme de commande, l'entrée et l'affectation pouvant être exécutées lors d'une phase de travail commune et être directement entreprises dans une fenêtre d'ingénierie du programme de commande, pour exécuter un paramétrage de commande et de dispositif commun; et un processeur pour le réglage d'un état de service du dispositif d'automatisation en réaction au paramètre de dispositif.

2. Dispositif d'automatisation paramétrable selon la revendication 1, réalisé pour commander un processus en recourant au paramètre de commande.
